# EUROPÄISCHE PATENTSCHRIFT

(11) **EP 0 820 646 B1**
(45) Veröffentlichungstag und Bekanntmachung des Hinweises auf die Patenterteilung: **15.12.1999**
(21) Anmeldenummer: 96907246.1
(22) Anmeldetag: 11.04.1996
(51) Int. Cl.: H01Q 1/32, H01Q 13/20, H04B 5/00

(54) **ANTENNENSYSTEM INSBESONDERE FÜR VERKEHRSTECHNISCHE KOMMUNIKATIONSSYSTEME**
ANTENNA SYSTEM, IN PARTICULAR AN ANTENNA SYSTEM FOR TRAFFIC COMMUNICATIONS SYSTEMS
SYSTEME D'ANTENNE DESTINE EN PARTICULIER A DES SYSTEMES DE COMMUNICATION RELATIFS A LA CIRCULATION

(30) Priorität: 12.04.1995 CH 105595; 17.05.1995 CH 144395; 29.08.1995 CH 245095
(43) Veröffentlichungstag der Anmeldung: 28.01.1998
(73) Patentinhaber: Siemens Schweiz AG, 8047 Zürich (CH)
(72) Erfinder: LAUPER, Alfred, CH-8047 Zürich (CH)
(86) Internationale Anmeldenummer: CH9600128
(87) Internationale Veröffentlichungsnummer: WO9632755

(56) Entgegenhaltungen:
- DE-A- 2 835 241
- DE-A- 2 914 485
- NL-A- 9 202 158
- US-A- 3 731 314
- US-A- 3 984 073
- US-A- 5 084 699
- MOTOROLA TECHNICAL DEVELOPMENTS, Bd. 17, Dezember 1992, SCHAUMBURG, ILLINOIS US, Seiten 142-144, XP000329524 COOK: "NOVEL APPLICATIONS OF RADIATING FEEDER"
- FUNKSCHAU, Bd. 47, Nr. 13, 1975, MUNCHEN DE, Seiten 66-68, XP002004404 BRETTING : "Abstrahlende Hochfrequenzleitung zur Bahnsteig-Überwachung"
- PATENT ABSTRACTS OF JAPAN vol. 13, no. 133 (M-809), 4.April 1989 & JP,A,63 301167 (MATSUSHITA ELECTRIC), 8.Dezember 1988,

## Beschreibung

Die vorliegende Erfindung betrifft ein Antennensystem nach dem Oberbegriff des Patentanspruchs 1. Ein derartiges Antennensystem ist aus US-A-5 084 699 bekannt.

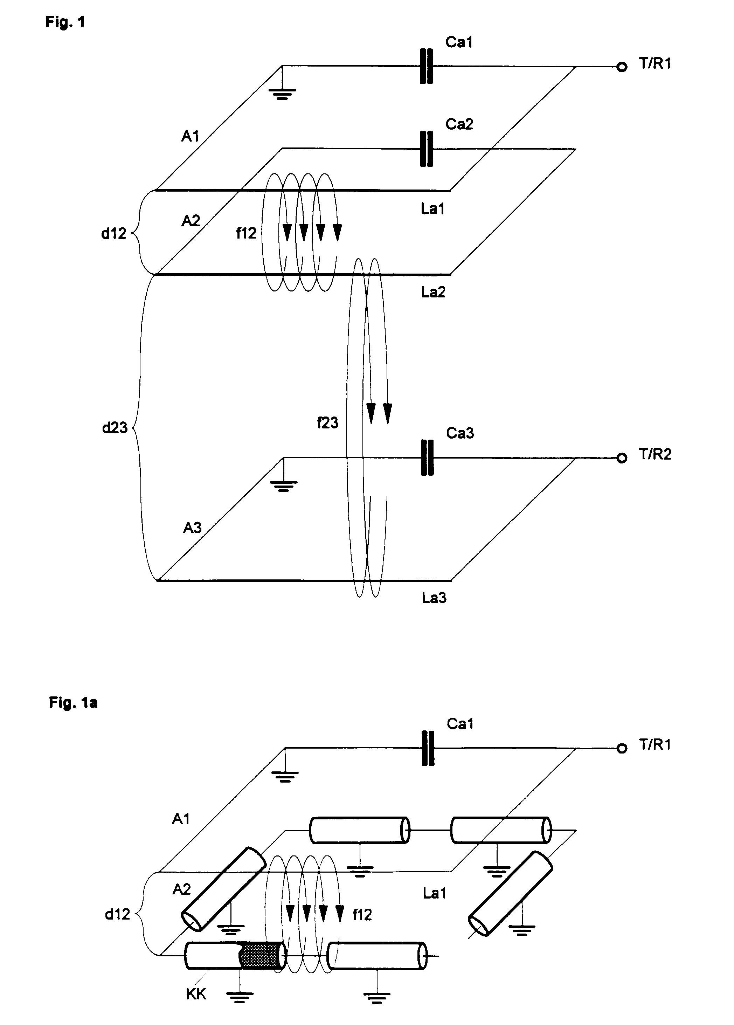

Antennen erfüllen grundsätzlich die Aufgabe von Transformationsvierpolen, die die Anpassung zwischen dem Wellenwiderstand der Antennenzuleitung und dem Wellenwiderstand des freien Raumes bewirken und die eine über die Antennenzuleitung übertragene elektrische Schwingung in eine elektromagnetische Welle umformen. Die Antenne wirkt dabei als Resonator. Das Ersatzschaltbild einer in Resonanz betriebenen verlustfreien Sendeantenne besteht nur aus deren Strahlungswiderstand. Gemäss C. Dorf, The electrical engineering handbook, CRC Press Inc., Boca Raton 1993, Kapitel 36.1, Seite 864 beträgt dieser Strahlungswiderstand für einen Dipol, der durch Berechnung der elektrischen und magnetischen Felder E, H ermittelt werden kann, ca. 73 Ohm. A.a.o. ist ferner beschrieben, dass die effektive Länge eines Dipols vergrössert werden kann, indem die Endkapazität des Dipols erhöht wird (end loading). Ein relativ kurzer Dipol kann durch diese Massnahme daher auf Signale mit grösseren Wellenlängen abgestimmt werden. In Fig. 1 ist z.B. eine Antenne A3 gezeigt, deren effektive Länge durch den Anschluss eines Kondensators Ca3 erhöht wurde. Die Drahtleitung, welche die Anschlüsse des Kondensators Ca3 miteinander verbindet, wirkt daher als Induktivität, und ist schematisch als Spule La3 bezeichnet. Es ist bekannt, dass an den Enden des Dipols (kapazitive Zone) maximale gegenphasige Spannungen und zwischen diesen Enden in der induktiven Zone bzw. in der Spule La3 maximale Ströme auftreten. Zur Übertragung von Daten zwischen zwei Sendestationen können deren Antennen z.B. über das magnetische Feld gekoppelt werden. In Fig. 1 wird die Antenne A3 auf diese Weise mit einer gleichartigen Antenne A2 gekoppelt. Ein Strom in der Spule La3 verursacht daher ein magnetisches Feld, durch das in der Spule La2 der Antenne A2 ein Strom induziert wird. Der Abstand d23 zwischen den Antennen La2 und La3 wird bevorzugt kleiner als die Wellenlänge der übertragenen Signale gewählt. Dadurch werden Verluste vermieden, die entstehen, falls elektrische Felder stark dämpfende Schichten durchlaufen müssen.

Zur Übertragung von Signalen mit maximaler Signalstärke werden die Antennen A2, A3, der Quellenwiderstand Rq im Sender und der Lastwiderstand Rl im Empfänger entsprechend abgestimmt. Dadurch können Signale mit hohem Spannungspegel zur Antenne A2 übertragen werden. Die Antennen A2 und A3 wirken dabei jedoch als schmalbandige Resonanzkreise, die nur Signale aus einem engen Frequenzbereich passieren lassen. Für Nachrichtenkanäle, in denen grössere Datenmengen zu übertragen sind, wird jedoch öfters eine grössere Bandbreite benötigt. Z.B. durch Dämpfung der Resonanzkreise können, deren Bandbreiten erhöht werden. Dadurch wird jedoch auch das Dämpfungsverhalten der Übertragungsstrecke beeinflusst, so dass aufgrund der Erhöhung der Bandbreite des Übertragungskanals gleichzeitig höhere Signaldämpfungen toleriert werden müssen. Diese Dämpfungen sind entsprechend höher, falls die Bandbreiten im Verhältnis zur Sendefrequenz bzw. zur Mittenfrequenz fm der Resonanzkreise gross sind. Die Bandbreite von 1 MHz kann bei einer Mittenfrequenz von 30 MHz u.U. noch zufriedenstellend, bei Mittenfrequenzen unter 10 MHz jedoch kaum noch ohne das Entstehen grösserer Übertragungsverluste realisiert werden. Zur Kompensation der auftretenden Verluste müssen daher entsprechend höhere Sendeleistungen vorgesehen werden.

Insbesondere bei verkehrstechnischen Kommunikationssystemen mit erdgebundenen und mobilen Kommunikationseinheiten sind jedoch die zulässigen Sendeleistungen beschränkt. Ferner ist davon auszugehen, dass diese Systeme in Zukunft einen erhöhten Bandbreitenbedarf aufweisen werden.

Der vorliegenden Erfindung liegt daher die Aufgabe zugrunde, ein Antennensystem anzugeben, das eine hohe Bandbreite und nur eine geringe Signaldämpfung aufweist.

Diese Aufgabe wird durch die im kennzeichnenden Teil des Patentanspruchs 1 angegebenen Massnahmen gelöst. Vorteilhafte Ausgestaltungen der Erfindung sind in weiteren Ansprüchen angegeben.

In verkehrstechnischen Kommunikationssystemen eingesetzt, erlauben die erfindungsgemässen Antennensysteme eine zuverlässigere Übertragung von grösseren Datenmengen. Durch das erfindungsgemässe Antennensystem kann ein breitbandiger Übertragungskanal geschaffen werden, der nur eine geringe Dämpfung aufweist. Das Antennensystem ist mit bescheidenem Aufwand kostengünstig herstellbar und kann auf verhältnismässig engem Raum realisiert werden, wodurch dessen Montage z.B. auch an Fahrzeugen problemlos möglich ist.

Ferner wird mit dem erfindungsgemässen Antennensystem eine gute Störfestigkeit bzw. ein hoher Störabstand gegenüber Fremdsignalen erzielt. Die erfindungsgemässe Vermeidung von Kopplungsverlusten ist unter anderem auch bei der Fernspeisung von verkehrstechnischen Kommunikationseinheiten von grosser Bedeutung. Dies ist insbesondere bei Kommunikationseinheiten wesentlich, die z.B. bei der Durchfahrt eines Fahrzeugs nur kurzzeitig für das Senden und Empfangen von Signalen in Betrieb gesetzt werden.

Eine weitere Reduktion von Übertragungsverlusten wird erzielt, indem die Antennen des Antennensystems auf Ferritmaterial und einer darunterliegenden Metallplatte gelagert werden. Dadurch werden Wirbelströme reduziert und stabile Übertragungsverhältnisse erzielt, die vom Montageort des Antennensystems weitgehend unabhängig sind.

Die Erfindung wird nachfolgend anhand einer Zeichnung beispielsweise näher erläutert. Dabei zeigt:
- Fig. 1: ein erfindungsgemässes Antennensystem, das aus einer ersten und einer zweiten Antenne besteht, an die eine dritte Antenne ankoppelbar ist,
- Fig. 2: das elektrische Ersatzschaltbild des in Fig. 1 gezeigten Antennensystems,
- Fig. 3: die Durchlasskurven der in Fig. 1 gezeigten, nicht aneinander angekoppelten Antennen
- Fig. 4: die Durchlasskurve des Antennensystems, das durch die aneinander angekoppelte erste und zweite Antennen gebildet wird,
- Fig. 5: die Durchlasskurve des Antennensystems, das durch die aneinander angekoppelte erste, zweite und dritte Antenne gebildet wird,
- Fig. 6 - 8: Möglichkeiten zur Ankopplung an eine Antenne,
- Fig. 9: eine vorteilhafte Anordnung der ersten und zweiten Antenne,
- Fig. 10: eine Möglichkeit zur Ankopplung der dritten Antenne an das durch die erste und zweite Antenne gebildete Antennensystem,
- Fig. 11: die Verwendung des erfindungsgemässen Antennensystems in der Verkehrstechnik und
- Fig. 12: eine auf einer Platte in bevorzugter Weise montierte Antenne.

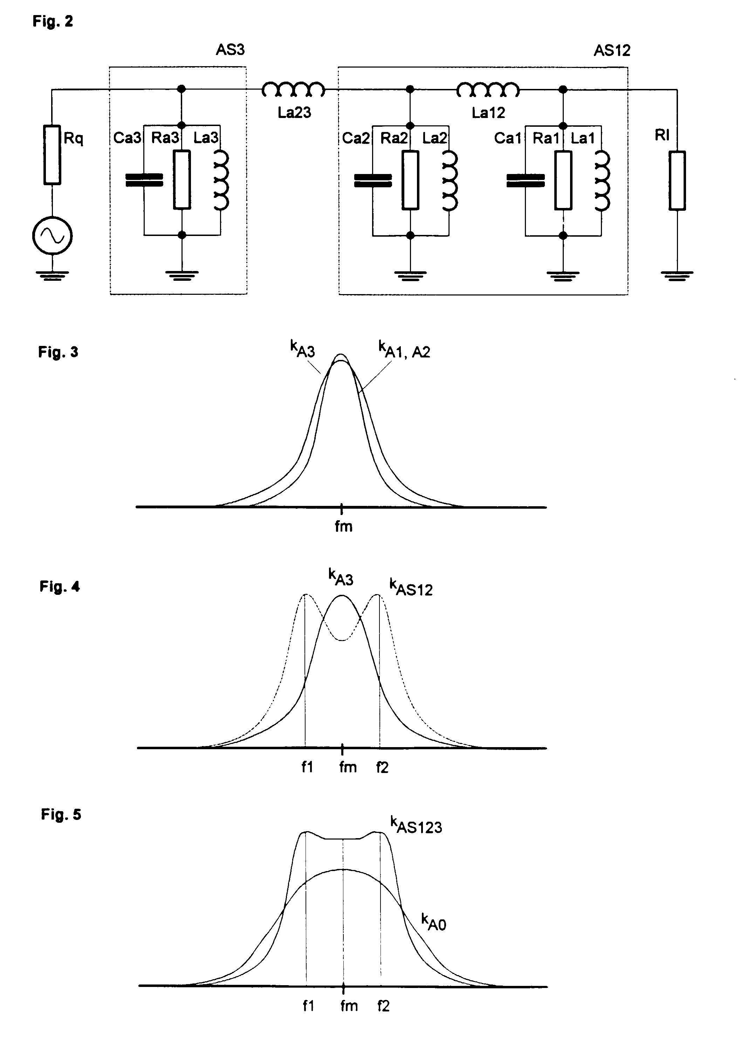

Fig. 1 zeigt ein Antennensystem, das durch zwei aneinander angekoppelte Resonanzkreise bzw. Antennen A1, A2 gebildet wird, die eine Spule La1; La2 und einen damit verbundenen Kondensator Ca1; Ca2 aufweisen. Die Spulen La1 und La2, die z.B. durch einen langgezogenen Draht, eine Koaxialleitung oder einen auf einer Platine (printed circuit board) aufgedruckten Metallstreifen gebildet wird, weisen einen gegenseitigen Abstand d12 auf, über den eine magnetische Kopplung bewirkt wird. Durch die Änderung des Abstandes d12 kann daher der gewünschte Kopplungsgrad eingestellt werden. Über dem Kondensator Ca1, der z.B. durch parallel liegende Metallstreifen gebildet wird, kann das empfangene Signal mit maximaler Spannung abgegriffen und einer Einheit T/R1 zugeführt werden, die als Empfänger oder als Sender und Empfänger dient. Beide Antennen sind schmalbandig auf ein Signal mit der Frequenz fm abgestimmt, das über die eingangs beschriebene dritte Antenne La3 abgestrahlt wird. Typische Durchlasskurven k_{A1, A2, A3} der auf dieselbe Frequenz fm (Mittenfrequenz der Sendesignale) abgestimmten Antennen A1, A2, A3 sind in Fig. 3 gezeigt. Die Durchlasskurven k_{A1, A2} der Antennen A1 und A2 überdecken sich, während die Kurve k_{A3} der dritten Antenne A3 beispielsweise einen etwas grösseren Durchlassbereich aufweist.

Fig. 4 zeigt, dass die aneinander angekoppelte erste und zweite Antenne A1 und A2 ein Schwingungssystem bilden, das zwei ausgeprägte Eigenfrequenzen f1, f2 aufweist, die sich um so weniger voneinander unterscheiden, je schwächer die Kopplung zwischen der ersten und zweiten Antenne A1, A2 ist. Die Durchlasskurve k_{A12} dieses Schwingungssystems entspricht daher derjenigen eines Bandpassfilters. Gekoppelte Schwingkreise, die z.B. aus Dobrinski / Krakau / Vogel, Physik für Ingenieure, Teubner Verlag, Stuttgart 1976, 4. Auflage, Kapitel 5.1.8.2, Seiten 316 / 317, Bild 316.1 bekannt sind, wurden bisher in Eingangs- oder Zwischenfrequenzstufen von Rundfunkempfängem eingesetzt.

Durch die Ankopplung der dritten Antenne A3 an das durch die Antennen A1 und A2 gebildete Schwingungssystem entsteht ein System mit drei schwingungsfähigen Einzelsystemen gleicher Eigenfrequenz fm, dessen Durchlasskurve k_{A123} angenähert einem Rechteck entspricht und im Vergleich zur Durchlasskurve k_{A0} eines breitbandigen Schwingkreises im Durchlassbereich deutlich geringere Dämpfungen (etwa -15dB) aufweist.

Die resultierende Durchlasskurve k_{A123} wird daher durch die Güte der Einzelsysteme sowie durch den Grad der gegenseitigen Kopplung bzw. durch die Wahl der Abstände d12 und d23 bestimmt.

Das Ersatzschaltbild des durch die Antennen A1, A2 und A3 gebildeten Schwingungssystems mit Quelle, Quellenwiderstand Rq, Lastwiderstand Rl sowie Verlustwiderständen Ral, Ra2 und Ra3 der Resonanzkreise ist in Fig. 2 dargestellt. Gezeigt sind ferner virtuelle Ersatzinduktivitäten La12, La23, welche aufgrund der gewählten Kopplung rechnerisch ermittelt werden können.

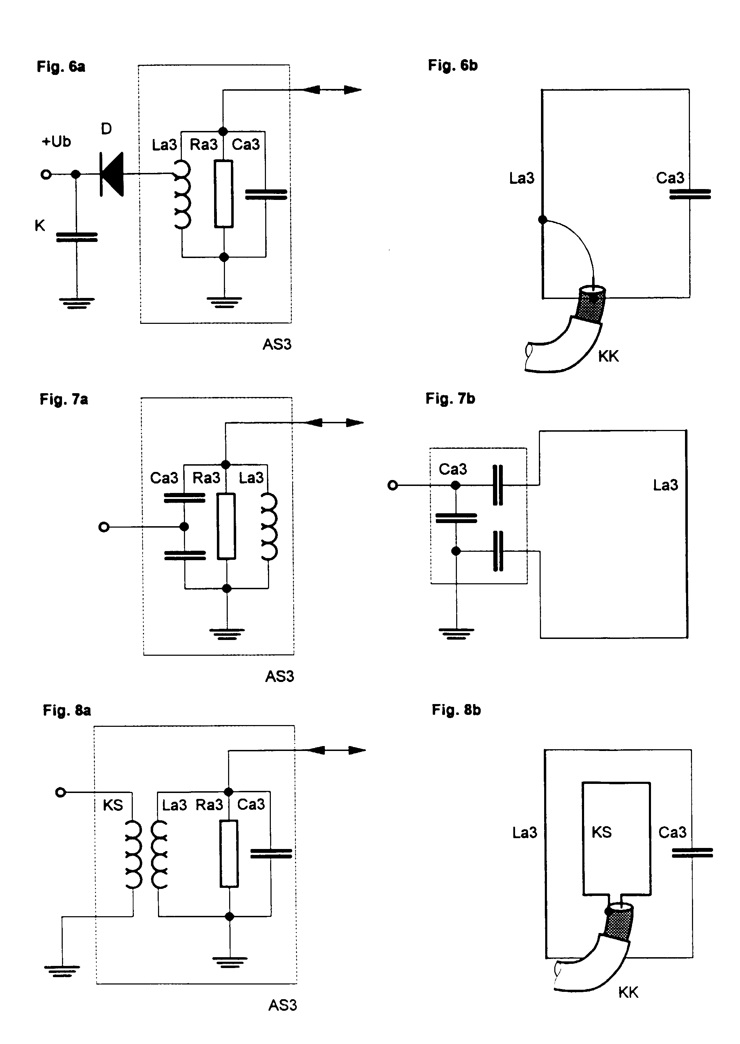

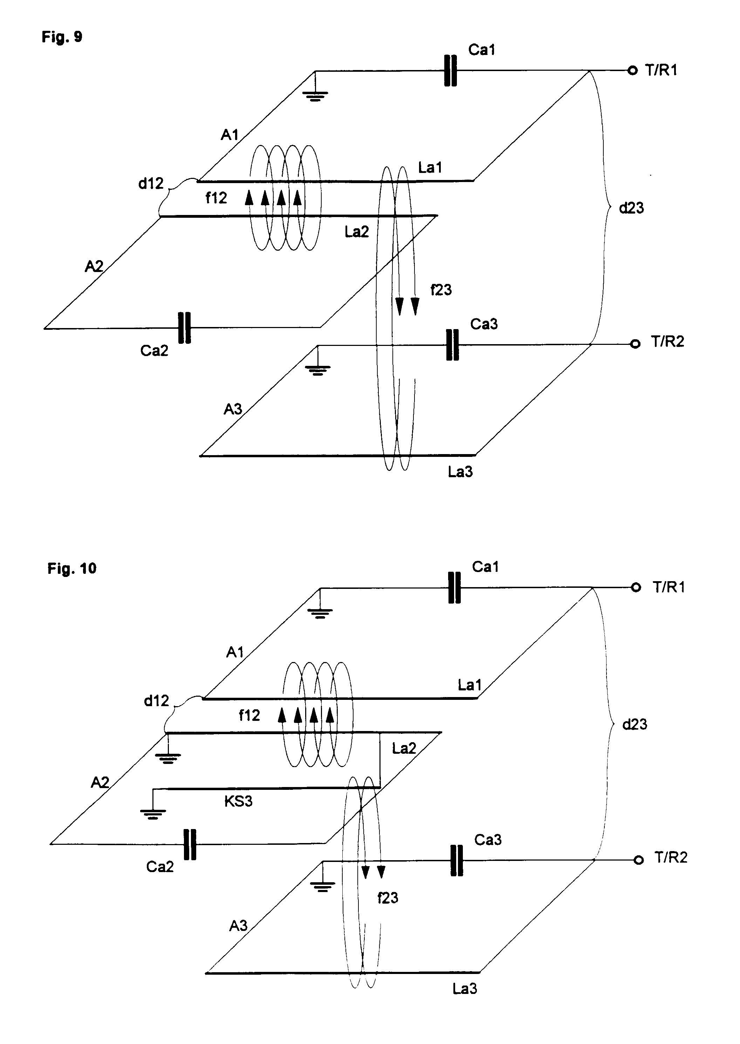

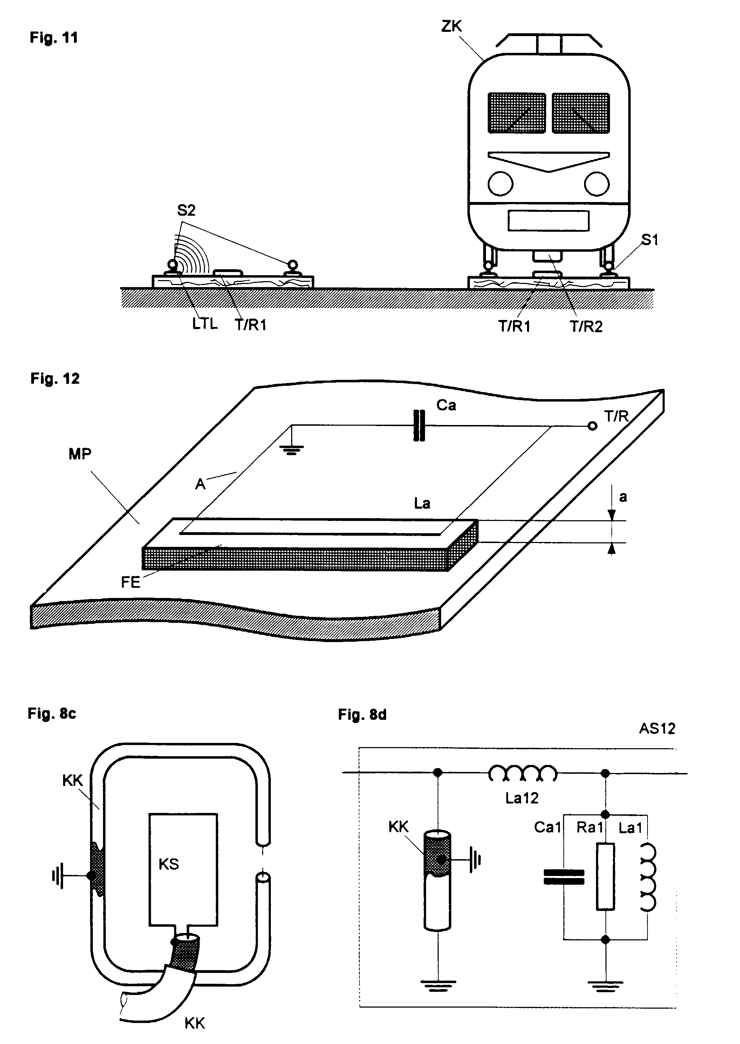

Möglichkeiten zur Ankopplung der Sende- und Empfangseinheiten T/R1, T/R2 oder von für die Stromerzeugung vorgesehenen Gleichrichtereinheiten an die Antennen A1, A2, A3 sind in Fig. 6 bis Fig. 8 gezeigt. Fig. 6a zeigt die Ankopplung an einen Abgriff der Spule La3. Fig. 6b zeigt die praktische Realisierung durch den Anschluss eines Koaxialkabels. In Fig. 7a und 7b ist gezeigt, dass der Kondensator Ca3 durch miteinander sowie mit der Sende- und Empfangseinheiten T/R1, T/R2 verbundene Einzelkondensatoren gebildet werden kann. In Fig. 8a und 8b ist gezeigt, dass die Sende- und Empfangseinheiten T/R1, T/R2 auch über eine Koppelspule KS transformatorisch an die Antennen A1, A2, A3 ankoppelbar sind.

In Fig. 6a ist für die Stromversorgung einer Kommunikationseinheit eine mit einem Kondensator C verbundene Diode D an die Spule La3 angekoppelt. Von der Diode D wird eine Versorgungsspannung +Ub abgegeben. Durch die erfindungsgemässe Reduktion der Kopplungsverluste steht in der ferngespeisten Kommunikationseinheit eine höhere Versorgungsleistung zur Verfügung.

In Fig. 9 sind die erste und zweite Antenne A1, A2 nicht übereinander, wie in Fig. 1, sondern in der gleichen Ebene angeordnet. Dies ist vorteilhaft, falls ein Fahrzeug, das mit einer Sende- und Empfangseinheit T/R zu versehen ist, nur über wenig Bodenfreiheit verfügt. Die Sende- und Empfangseinheit T/R mit dem damit verbundenen und in einer Ebene angeordneten Antennensystem AS12 (siehe Fig. 2) kann daher problemlos montiert werden. Die erste und zweite Antenne A1, A2 sind jedoch sowohl in der in Fig. 1, als auch in der in Fig. 9 gezeigten Anordnung relativ zueinander mechanisch fixiert, so dass die vorgesehene Kopplung zwischen diesen beiden Antennen A1, A2 unverändert bleibt.

In Fig. 10 ist die Ankopplung der Antenne A3 über eine Koppelspule KS3 an das in einer Ebene angeordnete Antennensystem AS12 gezeigt. Die Koppelspule KS3, die induktiv an die Spule La3 der Antenne A3 angekoppelt ist, ist, wie in Fig. 6 prinzipiell dargestellt, mit einem Abgriff der Spule La2 der Antenne A2 verbunden. Dadurch kann das Antennensystem AS12 u.U. vorteilhafter plaziert werden. Ferner lässt sich dadurch der gewünschte Kopplungsgrad zwischen dem Antennensystem AS12 und der Antenne A3 noch einfacher einstellen.

Während die Verwendung des erfindungsgemässen Antennensystems in der Rundfunktechnik oft kaum vorteilhaft anwendbar ist, z.B. weil die erforderliche Bandbreite insbesondere im Bereich der Radio- und Fernsehfrequenzen praktisch immer vorhanden ist, weil genügend Sendeleistung vorhanden ist und weil die Antennen des Systems stabil installiert werden können, können im Gegensatz dazu Übertragungssysteme der Verkehrstechnik, die in Zukunft zur Übertragung von hohen Datenraten vorgesehen werden und die bei relativ tiefen Sendeleistungen sowie tiefen Frequenzen von 1 MHz bis etwa 50 MHz arbeiten, durch den Einsatz des erfindungsgemässen Antennensystems deutlich verbessert werden.

Wie bereits oben beschrieben wurde, ergibt die Verwendung des erfindungsgemässen Antennensystems besondere Vorteile, falls einzelne Kommunikationseinheiten ferngespeist werden müssen. Durch die Reduktion der Kopplungsverluste ergibt sich daher eine höhere empfangsseitig zur Verfügung stehende Versorgungsleistung, oder es kann die Sendeleistung entsprechend reduziert werden. Ferner wird durch die erfindungsgemässen Massnahmen der Abstand zwischen den Pegeln der Nutz- und Störsignale vorteilhaft erhöht.

Fig. 11 zeigt zwei nebeneinander geführte Schienenpaare S1, S2. Auf den Schienen S1 ist ein mit einer mobilen Sende- und Empfangseinheit T/R2 versehener Eisenbahnzug ZK geführt. Zwischen den Schienen S1, S2 sind erdgebundene Sende- und Empfangseinheiten T/R1 vorgesehen, die für den Datenaustausch mit den auf den Schienenpaaren S1, S2 geführten Fahrzeugen ZK vorgesehen sind. In der praktischen Anwendung werden Informationen oft nur von den erdgebundenen zu den mobilen Sende- und Empfangseinheiten T/R übertragen. Möglich ist jedoch auch eine bidirektionale Datenübertragung. Da sich die Fahrzeuge mit Geschwindigkeiten bis zu einigen Hundert km/h bewegen, entstehen nur sehr kurze Kontaktzeiten von wenigen Millisekunden zwischen den erdgebundenen und den mobilen Sende- und Empfangseinheiten T/R. Ferner ist mit Verschmutzungen sowie Schnee und Eis zu rechnen. Weiterhin werden durch die nationalen Zulassungsbehörden nur Systeme mit relativ tiefen Sendeleistungen bewilligt.

Um bei tiefen Frequenzen im Bereich von einigen MHz (Kurzwellenbereich), bei grosser Bandbreite und geringer Sendeleistung die gewünschten Daten übertragen zu können, wird durch die erfindungsgemässen Massnahmen die Kontaktzeit verlängert, innerhalb der die Sende- und Empfangseinheiten T/R1 bzw. T/R2 ihre Informationen austauschen können. Dazu wird erfindungsgemäss die Streckendämpfung reduziert, wodurch Sende- und Empfangseinheiten T/R1 bzw. T/R2 früher in Kontakt treten können.

Insbesondere im Zusammenhang mit dem erfindungsgemässen Antennensystem sind die in Fig. 12 gezeigten Massnahmen besonders vorteilhaft anwendbar. Um die Antenne A gegen Einflüsse der Montageumgebung abzuschirmen, wird die Antenne A bevorzugt um einige Centimeter beabstandet auf einer elektrisch leitende Platine MP angeordnet. Beim Empfang oder der Erzeugung magnetischer Felder können dabei jedoch Wirbelströme in dieser Platine MP entstehen, die zusätzliche Übertragungsverluste erzeugen. Erfindungsgemäss wird zur Vermeidung dieser Übertragungsverluste zwischen der Platine MP und insbesondere dem induktiven Teil L der Antenne A daher ein Ferritelement FE vorgesehen, welches die Feldlinien f12 bzw. f23 bindet, so dass diese nicht in die Platine MP eintreten können. Die Höhe a des Ferritelementes FE ist entsprechend gewählt. Diese erfindungsgemässe Massnahme ist auch vorteilhaft anwendbar, wenn ein nichtleitendes Material für die Platine MP verwendet wird. Auch dann kann die Kopplung zwischen der ersten oder zweiten Antenne A1, A2 und der dritten Antenne A3 erhöht werden. Bevorzugt werden robuste, nicht-spröde Ferritelemente FE gewählt, die aus Kunststoff bestehen, in dem eine hohe Anzahl von Ferritpartikeln eingeschlossen ist.

In Fig. 1a wird die Antenne A2 durch ein Koaxialkabel gebildet, das zum Zweck der Abschirmung vorzugsweise in mehrere Kabelteile KK aufgetrennt ist, von denen jedes über die Abschirmung mit Erde verbunden ist. Durch diese Massnahme werden elektrische Felder abgeschirmt; magnetische Felder jedoch nicht beeinträchtigt. Die Länge des durch die Kabelteile KK gebildeten Koaxialkabels wird normalerweise entsprechend der halben oder einem Viertel der Wellenlänge der zu übertragenden Signale gewählt. Falls eine Abschirmung gegen elektrische Felder nicht notwendig ist, kann ein aus einem Stück bestehendes Koaxialkabel verwendet werden, dessen Abschirmung nicht mit Erde verbunden ist. Bevorzugt werden beide Antennen A1 und A2 durch eine Leitung (vorzugsweise eine Koaxialkabel) realisiert und gegen die Einwirkung elektrischer Felder abgeschirmt. Die Antenne (bzw. der Schwingkreis) A1 und/oder auch die Antenne A2 können durch die Verwendung eines Koaxialkabels einfacher hergestellt werden. Ferner werden Defekte vermieden, die durch Schäden am Kondensator oder an Lötverbindungen entstehen können.

Fig. 8c zeigt die Weiterbildung des in in Fig. 8b gezeigten Antennensystems. Der in Fig. 8b durch die Induktivität La3 und die Kapazität Ca3 gebildete Schwingkreis ist in Fig. 8c durch ein Koaxialkabel KK der Länge λ/2 oder λ/4 ersetzt.

Fig. 8d zeigt das Ersatzschaltbild des in Fig. 1a oder Fig. 8c gezeigten Antennensystems. Die Induktivität La1, die Kapazität Ca1 und der Widerstand Ra1 sind dabei stellvertretend angegeben für einen durch eine Leitung oder durch diskrete Bauteile gebildeten Schwingkreis.

Bevorzugt wird die dritte Antenne A3 als Linienleiter (Leckkabel) ausgestaltet (s. z.B. EP-A1-0 502 337), die induktiv an das durch die Antennen A1, A2 gebildete Antennensystem ankoppelbar ist. Dadurch kann bei verkehrstechnischen Kommunikationssystemen der Kontakt zwischen zwei Kommunikationseinheiten über längere Strecken aufrechterhalten werden. In Fig. 11 ist ein derartiges Leckkabel auf dem Schienenfuss der Eisenbahngeleise vorgesehen. Durch dieses Anordnung der Antenne A3 kann eine besonders gute induktive Übertragung über grössere Strecken, ohne nennenswerte Verluste erfolgen.

## Patentansprüche

1. Antennensystem mit einer ersten Antenne (A1), die mit einer ersten Sende- und/oder Empfangseinheit (T/R1) verbunden und an eine dritte Antenne (A3) ankoppelbar ist, welche mit einer zweiten Sende- und/oder Empfangseinheit (T/R2) verbunden ist, die zur Übertragung von Daten zur und/oder zum Empfang von Daten von der ersten Sende- und/oder Empfangseinheit (T/R1) vorgesehen ist, **dadurch gekennzeichnet**, dass die erste Antenne (A1) ein eine Kapazität (Ca1) und eine Induktivität (La1) aufweisender Parallelresonanzkreis ist, der induktiv und mechanisch mit einem zweiten eine Kapazität (Ca2) und einer Induktivität (La2) aufweisenden Parallelresonanzkreis gekoppelt ist, der eine zweite Antenne (A2) bildet und dass die über die Induktivitäten (La1, La2) induktiv gekoppelten Parallelschwingkreise der Antennen (A1, A2) praktisch ungedämpft bzw. schmalbandig auf zumindest annähernd dieselbe Eigenfrequenz fm abgestimmt sind.

2. Antennensystem nach Anspruch 1, **dadurch gekennzeichnet**, dass die erste und/oder die zweite Antenne (A1, A2) induktiv an die dritte Antenne (A3) ankoppelbar ist, die zumindest annähernd dieselbe Eigenfrequenz wie die Antennen (A1, A2) aufweist.

3. Antennensystem nach Anspruch 1 oder 2, **dadurch gekennzeichnet**, dass die erste, zweite und/oder dritte Antenne (A1, A2, A3) eine Induktivität (La1, La2, La3) in Form eines zumindest annähernd langgezogenen elektrischen Leiters aufweist, dessen Enden mit einer Kapazität (Ca1, Ca2, Ca3) verbunden sind.

4. Antennensystem nach Anspruch 3, **dadurch gekennzeichnet**, dass die Induktivität (La1; La2; La3) und die Kapazität (Ca1; Ca2; Ca3) mit einzelnen oder parallel geführten Drähten, Koaxialleitern oder Metallstreifen realisiert sind, die auf einer Platine angeordnet sind.

5. Antennensystem nach einem der vorhergehenden Ansprüche, **dadurch gekennzeichnet**, dass die dritte Antenne (A3) über eine Koppelspule (KS3) an die erste oder zweite Antenne (A1; A2) angekoppelt ist.

6. Antennensystem nach einem der vorhergehenden Ansprüche, **dadurch gekennzeichnet**, dass insbesondere die Induktivitäten (La1; La2) der Antennen (A1, A2) annähernd vertikal übereinander oder annähernd horizontal in einer Ebene angeordnet sind.

7. Antennensystem nach einem der vorhergehenden Ansprüche, **dadurch gekennzeichnet**, dass die Abstände d12, d23 zwischen den Induktivitäten (La1; La2; La3) derart gewählt sind, dass die Durchlasskurve k_{AS123} des durch die Antenne (A1, A2, A3) gebildeten Schwingungssystems die für die Datenübertragung geforderte Bandbreite aufweist.

8. Antennensystem nach einem der vorhergehenden Ansprüche, **dadurch gekennzeichnet**, dass insbesondere zur Erzielung grösserer Bandbreiten die erste und die zweite Antenne (A1, A2) oder die dritte Antenne (A3) an wenigstens eine weitere Antenne ankoppelbar ist.

9. Antennensystem nach einem der vorhergehenden Ansprüche, **dadurch gekennzeichnet**, dass wenigstens eine Sende- und/oder Empfangseinheit, die der ersten oder der zweiten Sende- und/oder Empfangseinheit (T/R1; T/R2) entspricht, an einem Streckenpunkt eines Verkehrsweges angeordnet ist und dass eine dazu korrespondierende zweite oder erste Sende- und/oder Empfangseinheit (T/R2; T/R1) an einem diesen Verkehrsweg befahrenden Fahrzeug angeordnet ist.

10. Antennensystem insbesondere nach einem der vorhergehenden Ansprüche, **dadurch gekennzeichnet**, dass die Induktivität (La1; La2; La3) der ersten, zweiten oder dritten Antenne (A1, A2, A3) über einer vorzugsweise elektrisch leitenden Platine (MP) angeordnet ist und dass zwischen der Induktivität (La1; La2; La3) und der Platine (MP) ein Ferritelement (FE) vorgesehen ist.

11. Antennensystem nach einem der vorhergehenden Ansprüche, **dadurch gekennzeichnet**, dass eine der Antennen (A1, A2, A3) mit einer für die Stromversorgung vorgesehenen Gleichrichtereinheit (D, C) gekoppelt ist.

12. Antennensystem nach einem der vorhergehenden Ansprüche, **dadurch gekennzeichnet**, dass zumindest eine der Antennen (A1, A2, A3) durch eine Leitung, insbesondere eine Koaxialleitung gebildet wird.

13. Antennensystem nach Anspruch 12, **dadurch gekennzeichnet**, dass die Länge der Leitung derart gewählt ist, dass die auftretende Resonanzfrequenz zumindest annähernd dem Wert fm entspricht.

14. Antennensystem nach Anspruch 12 oder 13, **dadurch gekennzeichnet**, dass die Leitung gegen Einwirkungen elektrischer Felder abgeschirmt ist.

15. Antennensystem nach Anspruch 14, **dadurch gekennzeichnet**, dass die Leitung in Teilstücke (KK) unterteilt ist, deren Abschirmungen mit Erde verbunden sind, so dass die Leitung gegen Einwirkungen elektrischer Felder abgeschirmt ist, wobei eine Beeinträchtigung des magnetischen Feldes vermieden wird.

16. Antennensystem nach einem der vorhergehenden Ansprüche, **dadurch gekennzeichnet**, dass die dritte Antenne (A3) ein Linienleiter bzw. ein Leckkabel (LTL) ist, der bzw. das vorzugsweise induktiv an das durch die erste und zweite Antenne (A1, A2) gebildete Antennensystem ankoppelbar ist.

17. Antennensystem nach Anspruch 16, **dadurch gekennzeichnet**, dass der Linienleiter (LTL) im Schienenfuss von Eisenbahngeleisen angeordnet ist.

## Claims

1. Aerial system with a first aerial (A1) which is connected to a first transmitting and/or receiving unit (T/R1) and can be coupled to a third aerial (A3), which is connected to a second transmitting and/or receiving unit (T/R2), which is provided for the transfer of data for [sic] and/or for receiving data from the first transmitting and/or receiving unit (T/R1), characterized in that the first aerial (A1) is a parallel resonant circuit having a capacitance (Ca1) and an inductance (La1), which circuit is inductively and mechanically coupled to a second parallel resonant circuit having a capacitance (Ca2) and an inductance (La2), which second circuit forms a second aerial (A2), and in that the parallel oscillating circuits of the aerials (A1, A2) inductively coupled by way of the inductances (La1, La2) are tuned in a practically undamped and narrow-band manner to at least approximately the same natural frequency fm.

2. Aerial system according to claim 1, characterized in that the first and/or the second aerial (A1, A2) can be coupled inductively to the third aerial (A3) which has at least approximately the same natural frequency as the aerials (A1, A2).

3. Aerial system according to claim 1 or 2, characterized in that the first, second and/or third aerial (A1, A2, A3) have an inductance (La1, La2, La3) in the form of an at least approximately long drawn-out electrical conductor, the ends of which are connected to a capacitance (Ca1, Ca2, Ca3).

4. Aerial system according to claim 3, characterized in that the inductance (La1; La2; La3) and the capacitance (Ca1; Ca2; Ca3) are realized with wires, coaxial conductors or metal strips which are individual or guided in parallel and which are arranged on a printed circuit board.

5. Aerial system according to one of the preceding claims, characterized in that the third aerial (A3) is coupled to the first or second aerial (A1; A2) by way of a coupling coil (KS3).

6. Aerial system according to one of the preceding claims, characterized in that in particular the inductances (La1; La2) of the aerials (A1, A2) are arranged approximately vertically one above the other or approximately horizontally in a plane.

7. Aerial system according to one of the preceding claims, characterized in that the spacings d12, d23 between the inductances (La1; La2; La3) are selected in such a way that the response curve k_{AS123} of the oscillation system formed by the aerial (A1, A2, A3) has the bandwidth required for the data transfer.

8. Aerial system according to one of the preceding claims, characterized in that the first and the second aerial (A1, A2) or the third aerial (A3) can be coupled to at least one further aerial in particular to achieve larger bandwidths.

9. Aerial system according to one of the preceding claims, characterized in that at least one transmitting and/or receiving unit which corresponds to the first or the second transmitting and/or receiving unit (T/R1; T/R2) is arranged on a track point of a traffic route, and in that a corresponding second or first transmitting and/or receiving unit (T/R2; T/R1) is arranged on a vehicle travelling on this traffic route.

10. Aerial system in particular according to one of the preceding claims, characterized in that the inductance (La1; La2; La3) of the first, second or third aerial (A1, A2, A3) is arranged over a preferably electroconductive printed circuit board (MP), and in that a ferrite element (FE) is provided between the inductance (La1; La2; La3) and the printed circuit board (MP).

11. Aerial system according to one of the preceding claims, characterized in that one of the aerials (A1, A2, A3) is coupled to a rectifier unit (D, C) provided for the current supply.

12. Aerial system according to one of the preceding claims, characterized in that at least one of the aerials (A1, A2, A3) is formed by a line, in particular a coaxial line.

13. Aerial system according to claim 12, characterized in that the length of the line is selected in such a way that the occurring resonant frequency corresponds at least approximately to the value fm.

14. Aerial system according to claim 12 or 13, characterized in that the line is shielded against the effects of electrical fields.

15. Aerial system according to claim 14, characterized in that the line is divided into sections (KK), the shields of which are connected to earth, so that the line is shielded against the effects of electrical fields, with an impairment of the magnetic field being avoided.

16. Aerial system according to one of the preceding claims, characterized in that the third aerial (A3) is a line conductor or a leakage cable (LTL) which can preferably be coupled inductively to the aerial system formed by the first and second aerial (A1, A2).

17. Aerial system according to claim 16, characterized in that the line conductor (LTL) is arranged in the rail foot of train tracks.

## Revendications

1. Système d'antenne comportant une première antenne (A1) qui est reliée à une première unité d'émission et de réception (T/R1) et qui peut être couplée à une troisième antenne (A3) qui est reliée à une deuxième unité d'émission et de réception (T/R2) qui sert à la transmission de données vers l'unité d'émission et de réception (T/R1) et/ou à la réception de données depuis celle-ci,
caractérisé par le fait que la première antenne (A1) est un circuit résonant parallèle qui comporte une capacité (Ca1) et une inductance (La1) et qui est couplé de façon inductive et mécanique à un deuxième circuit résonant parallèle qui comporte une capacité (Ca2) et une inductance (La2) et qui forme une deuxième antenne (A2) et que les circuits résonants parallèles des antennes (A1, A2) couplés par induction par l'intermédiaire des inductances (La1, La2) sont accordés pratiquement sans affaiblissement et à bande étroite sur au moins approximativement la même fréquence propre fm.

2. Système d'antenne selon la revendication 1, caractérisé par le fait que la première et/ou la deuxième antenne (A1, A2) peut être couplée par induction à la troisième antenne (A3) qui présente au moins approximativement la même fréquence propre que les antennes (A1, A2).

3. Système d'antenne selon la revendication 1 ou 2, caractérisé par le fait que la première, la deuxième et/ou la troisième antenne (A1, A2, A3) comporte une inductance (La1, La2, La3) sous la forme d'un conducteur électrique au moins approximativement allongé dont les extrémités sont reliées à une capacité (Ca1, Ca2, Ca3).

4. Système d'antenne selon la revendication 3, caractérisé par le fait que l'inductance (La1, La2, La3) et la capacité (Ca1, Ca2, Ca3) sont mises en oeuvre avec des fils, conducteurs coaxiaux ou pistes métalliques, individuels ou guidés parallèlement, qui sont agencés sur une plaque.

5. Système d'antenne selon l'une des revendications précédentes, caractérisé par le fait que la troisième antenne (A3) est couplée à la première ou à la deuxième antenne (A1, A2) par l'intermédiaire d'un étage de couplage (KS3).

6. Système d'antenne selon l'une des revendications précédentes, caractérisé par le fait que, en particulier, les inductances (La1, La2) des antennes (A1, A2) sont agencées approximativement verticalement l'une au-dessus de l'autre ou approximativement horizontalement dans un plan.

7. Système d'antenne selon l'une des revendications précédentes, caractérisé par le fait que les distances d12, d23 entre les inductances (La1, La2, La3) sont choisies de telle sorte que la courbe caractéristique en bande passante kAS123 du système oscillant formé par les antennes (A1, A2, A3) présente la largeur de bande exigée pour la transmission de données.

8. Système d'antenne selon l'une des revendications précédentes, caractérisé par le fait que, en particulier pour obtenir de plus grandes largeurs de bande, la première et la deuxième antenne (A1, A2) ou la troisième antenne (A3) peuvent être couplées à au moins une autre antenne.

9. Système d'antenne selon l'une des revendications précédentes, caractérisé par le fait que au moins une unité d'émission et de réception, qui correspond à la première ou à la deuxième d'émission et de réception (T/R1, T/R2), est agencée à un point d'une voie de circulation et qu'une deuxième ou une première unité d'émission et de réception (T/R2, T/R1) correspondante est agencée sur un véhicule circulant sur cette voie de circulation.

10. Système d'antenne selon l'une des revendications précédentes, caractérisé par le fait que l'inductance (La1, La2, La3) de la première, deuxième ou troisième antenne (A1, A2, A3) est agencée au-dessus d'une plaque (MP) électriquement conductrice de préférence et qu'il est prévu entre l'inductance (La1, La2, La3) et la plaque (MP) un élément en ferrite (FE).

11. Système d'antenne selon l'une des revendications précédentes, caractérisé par le fait que l'une des antennes (A1, A2, A3) est couplée à une unité de redressement (D, C) prévue pour l'alimentation en courant.

12. Système d'antenne selon l'une des revendications précédentes, caractérisé par le fait qu' au moins l'une des antennes (A1, A2, A3) est formée par une ligne, notamment une ligne coaxiale.

13. Système d'antenne selon la revendication 12, caractérisé par le fait que la longueur de la ligne est choisie de telle sorte que la fréquence de résonance apparaissant correspond au moins approximativement à la valeur fm.

14. Système d'antenne selon la revendication 12 ou 13, caractérisé par le fait que la ligne est protégée par blindage contre des actions de champs électriques.

15. Système d'antenne selon la revendication 14, caractérisé par le fait que la ligne est divisée en tronçons (KK) dont les blindages sont reliés à la terre de telle sorte que la ligne est protégée par blindage contre des actions de champs électriques tout en évitant de nuire au champ magnétique.

16. Système d'antenne selon l'une des revendications précédentes, caractérisé par le fait que la troisième antenne (A3) est un câble de voie ou câble de fuite (LTL) qui peut être couplé de préférence par induction au système d'antenne formé par la première et la deuxième antenne (A1, A2).

17. Système d'antenne selon la revendication 16, caractérisé par le fait que le câble de voie (LTL) est agencé dans le patin de rail de voies ferrées.
